# EUROPÄISCHE PATENTSCHRIFT

(11) **EP 3 174 644 B1**
(45) Veröffentlichungstag und Bekanntmachung des Hinweises auf die Patenterteilung: **08.07.2020**
(21) Anmeldenummer: 15741525.8
(22) Anmeldetag: 20.07.2015
(51) Int. Cl.: B06B 3/00, B29C 65/08

(54) **VORRICHTUNG ZUM ULTRASCHALLBEARBEITEN VON MATERIALIEN MIT TRIGGEREINRICHTUNG**
DEVICE FOR THE ULTRASONIC PROCESSING OF MATERIALS HAVING A TRIGGER MECHANISM
DISPOSITIF DE TRAITEMENT PAR ULTRASONS DE MATIÈRES COMPORTANT UN MÉCANISME DE DÉCLENCHEMENT

(30) Priorität: 28.07.2014 DE 102014110634
(43) Veröffentlichungstag der Anmeldung: 07.06.2017
(73) Patentinhaber: Herrmann Ultraschalltechnik GmbH & Co. KG, 76307 Karlsbad (DE)
(72) Erfinder: GNAD, Gerhard, 75210 Keltern (DE)
(74) Vertreter: WSL Patentanwälte Partnerschaft mbB
(86) Internationale Anmeldenummer: PCT/EP2015/066508
(87) Internationale Veröffentlichungsnummer: WO 2016/016025

(56) Entgegenhaltungen:
- EP-A1- 1 609 582
- EP-A1- 2 881 184
- DE-A1-102006 020 417
- JP-A- 2001 354 210
- JP-A- 2002 059 483

## Beschreibung

Die vorliegende Erfindung betrifft eine Vorrichtung zum Ultraschallbearbeiten von Materialien mit einem Ultraschallbearbeitungssystem, welches einen Ultraschallgenerator, einen Konverter, eine Sonotrode, sowie ein Gegenwerkzeug aufweist.

Der Ultraschallgenerator erzeugt eine elektrische Wechselspannung, welche mit Hilfe des Konverters in eine akustische Ultraschallschwingung umgewandelt wird, deren Frequenz derart an die Sonotrode angepasst ist, dass diese in eine Resonanzschwingung versetzt wird. Zur Bearbeitung der gewünschten Materialien werden diese zwischen Sonotrode einerseits und Gegenwerkzeug andererseits angeordnet. Die mit einer Ultraschallschwingung angeregte Sonotrode presst dann das Material auf das Gegenwerkzeug und bearbeitet es.

Insbesondere bei der Bearbeitung von Materialbahnen ist die Sonotrode und/oder das Gegenwerkzeug mit einer im Wesentlichen zylinderförmigen Siegelfläche ausgestattet und wird während der Bearbeitung um die Zylinderachse gedreht. Dabei stimmt in der Regel die Umfangsgeschwindigkeit der zylinderförmigen Siegelfläche mit der Materialvorschubgeschwindigkeit überein.

Häufig weist die Siegelfläche Strukturen auf, wie zum Beispiel eine über die Siegelfläche vorstehende Erhebung. Bei der Bearbeitung des Materials wird die Struktur der Siegelfläche in das Material übertragen.

So kann beispielsweise die Erhebung länglich bzw. rippenförmig sein und sich in axialer Richtung auf der Siegelfläche erstrecken. Selbstverständlich sind auch andere Formen von Erhebungen, wie z.B. punktförmige oder kreisförmige Erhebungen möglich.

Im Folgenden wird die Erfindung am Beispiel einer am Gegenwerkzeug angebrachten Erhebung beschrieben. Es versteht sich jedoch, dass die Erhebung stattdessen oder zusätzlich an der Sonotrode angebracht sein kann. Selbstverständlich können auch eine Vielzahl von Erhebungen vorgesehen sein.

Während der Bearbeitung erfolgt eine Versiegelung immer dann, wenn die schwingenden Sonotrode über das Material eine Kraft auf die Erhebung ausübt.

Beispielsweise können mit länglichen, quer zu einer Materialbahn verlaufenden Erhebungen auf die beschriebene Weise Quersiegelnähte in Materialbahnen eingebracht werden. Immer dann, wenn die am Gegenwerkzeug angeordnete längliche Erhebung gegenüber der Sonotrode angeordnet ist, kommt es zu einer Ausbildung einer Quersiegelnaht.

Die Verwendung von Erhebungen führt jedoch auch dazu, dass sich die Kraft, die von der Sonotrode über das Material auf das Gegenwerkzeug ausgeübt wird, immer dann abrupt erhöht, wenn bei der Rotation des Gegenwerkzeuges eine Erhebung gegenüber der Sonotrode positioniert wird. Dadurch kommt es zu einer Ankopplung des Schwingsystems an das Gegenwerkzeug. Die Schwingung der Sonotrode wird dadurch gedämpft und die Eigenfrequenz der Sonotrode wird verändert.

Folglich muss die Sonotrode, um beispielsweise eine möglichst konstante Schwingungsamplitude zu erzeugen, entweder mit einer anderen Frequenz oder einer größeren Leistung angeregt werden.

Daher ist im allgemeinen der Generator geregelt, d.h. es werden bestimmte Systemparameter des elektrischen und mechanischen Schwingsystems bestimmt und, falls sich diese verändern, durch Anpassung von Frequenz und/oder Spannung und/oder Stromstärke des Generators wieder auf den gewünschten Wert geregelt.

Dabei wird im Allgemeinen versucht, die Schwingungsamplitude möglichst konstant zu halten und dabei möglichst wenig Energie zu verbrauchen.

Die Regelung ist in der Lage auf allmähliche Veränderungen des Systems, beispielsweise auf Temperaturänderungen und der damit verbundenen Längenänderung der Sonotrode sehr zuverlässig zu reagieren.

Der Regelung sind jedoch insbesondere bei abrupten Veränderungen Grenzen gesetzt. Insbesondere bei Lastwechseln, d.h. immer dann, wenn die Erhebung mit dem Material in Bearbeitungseingriff gerät, ändern sich die Systemparameter abrupt und die Regelung muss eingreifen.

Es hat sich jedoch gezeigt, dass die Regelung nicht ausreichend schnell reagiert. Insbesondere bei höheren Bearbeitungsgeschwindigkeiten, ist die Erhebung nur sehr kurzfristig mit dem Material in Kontakt, sodass nicht selten die Regelung auf die kurzzeitige Lasterhöhung erst dann reagiert, wenn die Erhebung bereits wieder außer Eingriff getreten ist. Eine Konstanthaltung der Schwingungsamplitude ist hier nur schwer möglich. Alle Lastwechsel von kleiner als 5 ms führen daher zu erheblichen Schwankungen der Schwingungsamplitude.

In der DE 10 2006 020 417 ist daher bereits vorgeschlagen worden, eine Prozessgröße aus dem Bearbeitungsprozess zu ermitteln und die derart ermittelte Prozessgröße mit der Stellgröße der Regelung zu verknüpfen.

Beispielsweise kann die Prozessgröße die Kraft der Sonotrode auf das Material sein, die in der Regel proportional zur Bearbeitungskraft der Sonotrode ist. Wird während des Betriebes festgestellt, dass die Auslenkung bzw. die Bearbeitungskraft der Sonotrode ansteigt, was insbesondere dann der Fall sein wird, wenn die Erhebung in Bearbeitungseingriff gerät, so wird die Änderung gegebenenfalls nach geeigneter Skalierung auf die Stellgröße aufaddiert. Dadurch kann die Störung der Schwingungsamplitude auf Grund von Lastwechseln deutlich reduziert werden. In der Praxis wird ein Kraftsensor in den Übertragungsweg zwischen einer Zustelleinrichtung der Ultraschallschwingeinheit und der Sonotrode eingebaut. Mit diesem wird dann die Kraft gemessen, die in der Regel mit der Kraft, die die Sonotrode auf die Materialbahn ausübt, übereinstimmt.

Allerdings kommt es dennoch zu Schwankungen der Schwingungsamplitude. Insbesondere nachdem die Erhebung wieder außer Eingriff getreten ist, treten häufig Nachschwingungen auf. Dies liegt im Wesentlichen daran, dass durch die abrupte Lasterhöhung die Halterung der Sonotrode elastisch verformt wird und bei der folgenden abrupten Lasterniedrigung die Sonotrode eine gedämpfte Schwingung um die Ruhelage durchführt.

Diese gedämpfte Schwingung führt jedoch dazu, dass auch die am Kraftsensor gemessene Kraft oszilliert und daher die Prozessgröße oszilliert und selbst dann in den Regelprozess eingreift, wenn die Erhebung bereits nicht mehr in Kontakt mit dem Material ist. Der Regelprozess wird dadurch erheblich gestört, so dass es einige Zeit benötigt, bis die Sonotrode wieder eine konstante Schwingungsamplitude aufweist.

Mit der in der DE 10 2006 020 417 B4 beschriebenen Vorrichtung können Materialbahngeschwindigkeiten von 80m/min mit ausreichender Qualität bearbeitet werden. Heutzutage werden jedoch deutlich höhere Bearbeitungsgeschwindigkeiten von z.B. 200-300 m/min gewünscht.

Da eine konstante Schwingungsamplitude spätestens dann erreicht werden muss, wenn die nächste Erhebung mit dem Material in Eingriff tritt, ist durch die Erhöhung der Verarbeitungsgeschwindigkeit die in der DE 10 2006 020 417 beschriebene Regelung nicht mehr ausreichend.

Die EP 1609582 A1, JP 200259483 und JP 2001354210 zeigen verschieden Vorrichtung zum Bearbeiten von Materialien.

Aufgabe der vorliegenden Erfindung ist es daher, eine Vorrichtung der eingangs genannten Art bereitzustellen, die eine schnellere Regelung des Ultraschallgenerators insbesondere bei abruptem Lastwechseln ermöglicht.

Erfindungsgemäß wird diese Aufgabe dadurch gelöst das eine Triggereinrichtung vorgesehen ist, welche die Position der Erhebung bestimmt und eingerichtet ist, um in Abhängigkeit von der Positionsbestimmung die Verknüpfung der Prozessgröße mit der Stellgröße zu gestatten oder zu verhindern.

Mit anderen Worten könnte beispielsweise dann, wenn die Erhebung sich auf der der Material abgewandten Seite des Gegenwerkzeugs befindet, die Verknüpfung der Prozessgröße mit der Stellgröße abgeschaltet werden, sodass eine etwaige Veränderung der Prozessgröße dann keinen störenden Einfluss auf die Stellgröße mehr hat und die Regelung effektiv funktioniert.

Vorzugsweise ist die Triggereinrichtung derart ausgebildet, dass sie die Verknüpfung der Prozessgröße mit der Stellgröße gestattet, wenn die Erhebung mit dem zu bearbeitenden Material in Bearbeitungskontakt tritt, und die Verknüpfung verhindert, wenn die Erhebung nicht in Bearbeitungskontakt mit dem zu bearbeitenden Material steht.

Mit anderen Worten die in der DE 10 2006 020 417 B4 beschriebene Verknüpfungsmaßnahme unmittelbar bevor die Erhebung das Material verschweißt eingeschaltet und unmittelbar nachdem der Schweißvorgang beendet wird, wieder ausgeschaltet.

Erfindungsgemäß wird daher diese Verknüpfung von Prozessgröße und Stellgröße in Abhängigkeit von der Position der Erhebung durchgeführt, sodass dann, wenn keine abrupte Laständerung zu erwarten ist, weil sich die Erhebung nicht in der Nähe des zu bearbeitenden Materials befindet, die Verknüpfung nicht benutzt wird.

In einer bevorzugten Ausführungsform wird jedoch, um die Regelung nicht negativ zu beeinflussen, die Triggereinrichtung derart ausgebildet, dass während die Verknüpfung der Prozessgröße mit der Stellgröße verhindert wird, stattdessen ein vorbestimmter Referenzwert mit der Stellgröße verknüpft wird. Der vorbestimmte Referenzwert muss nicht konstant sein, sondern kann von der Zeit oder der Position der Erhebung abhängen.

In einer bevorzugten Ausführungsform ist vorgesehen, dass der vorbestimmte Referenzwert als derjenige Wert der Prozessgröße festgelegt ist, der unmittelbar bevor die Triggereinrichtung die Verknüpfung erlaubt, erfasst worden ist. Dieser Maßnahme liegt die Überlegung zu Grunde, dass unmittelbar bevor eine abrupte Laständerung zu erwarten ist, der Prozessgrößenwert, wie zum Beispiel die erfasste Siegelkraft, einen nahezu konstanten Wert aufweist. Dieser Wert wird dann an Stelle des gemessenen Kraftwertes der Verknüpfung zugeführt, wenn die Verknüpfung mit der Prozessgröße verhindert wird.

Erfindungsgemäß weist die Triggereinrichtung einen Sensor zur Bestimmung der Position der Erhebung auf. Dies kann beispielsweise induktiv erfolgen. Grundsätzlich könnte jedoch der Antrieb von Gegenwerkzeug und/ Sonotrode derart ausgeführt sein, dass sie die Bestimmung der Position der Erhebung erlauben.

Weitere Vorteile, Merkmale und Anwendungsmöglichkeiten der vorliegenden Erfindung werden deutlich anhand der folgenden Beschreibung einer bevorzugten Ausführungsform der zugehörigen Figuren.

Es zeigen:
Figur 1 eine schematische Darstellung einer erfindungsgemäßen Vorrichtung und
Figur 2 ein Diagramm, welches eine Kraftmessung an der Sonotrode über der Zeit darstellt.

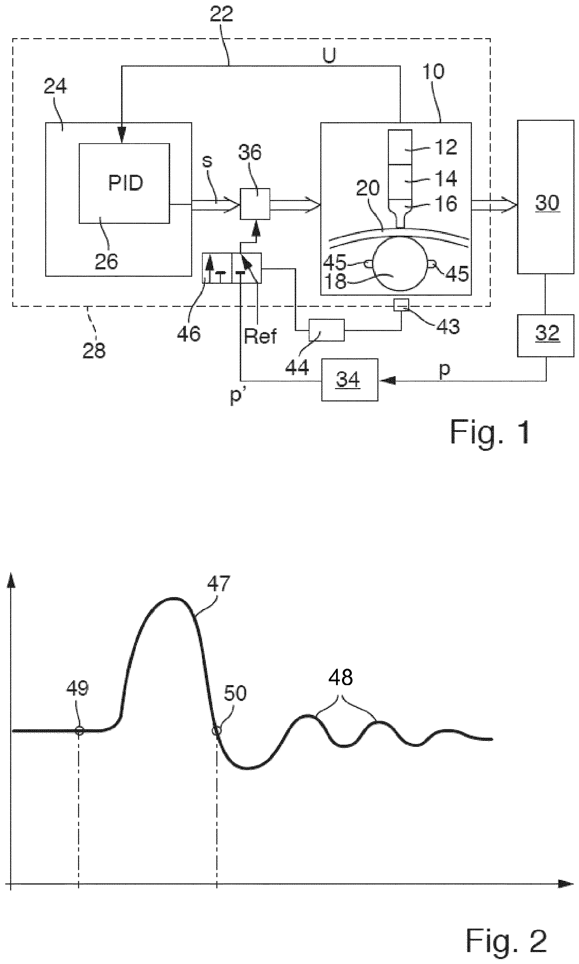

Die Figur 1 zeigt ein Schaubild einer erfindungsgemäßen Ultraschallbearbeitungsvorrichtung. Diese weist ein Schwingsystem 10 auf, welches einen Konverter 12, einen Amplitudentransformator 14, eine Ultraschallsonotrode 16 und ein Gegenwerkzeug 18 aufweist. Zwischen Sonotrode 16 und Gegenwerkzeug 18 ist das zu bearbeitende Material 20, wie zum Beispiel eine Materialbahn angeordnet. Der Konverter 12 wird mittels eines Ultraschallgenerators (nicht gezeigt) mit einer Wechselspannung versorgt.

Dem Schwingsystem 10 werden Signale (u) entnommen, die über eine Rückführstrecke 22 einer Regeleinrichtung 24 zugeführt werden. Diese Regeleinrichtung 24 weist einen PID-Regler 26 auf. Die Regeleinrichtung 24 erzeugt eine Stellgröße (s), welche dem Schwingsystem 10 und insbesondere dem Konverter 12 zugeführt wird. Das Schwingsystem 10 mit der Regeleinrichtung 24 bildet einen geregelten elektrischen und mechanischen Schwingkreis 28. Die Regeleinrichtung 24 kann in den Ultraschallgenerator integriert sein.

Mit der Bezugszahl 30 ist ein Bearbeitungsprozess, insbesondere ein Schweißprozess bezeichnet, der außerhalb des Schwingkreises 28 liegt, da er nicht direkt von den elektrischen und mechanischen Größen beeinflusst wird. Dieser Bearbeitungsprozess 30 ist mit einem Kraftsensor 32 verbunden, mit welchem der Verlauf der Schweißkraft ermittelt wird. Der Kraftsensor 32 ermittelt eine Prozessgröße (p), die einer Skaliereinheit 34 zugeführt wird. Diese Skaliereinheit 34 liefert eine skalierte Prozessgröße (p'), die einer Verknüpfungsstelle 36 zugeführt wird. Diese Verknüpfungsstelle 36 befindet sich zwischen der Regeleinrichtung 24 und dem Schwingsystem 10, sodass nicht nur die skalierte Prozessgröße (p'), sondern auch die Stellgröße (s) der Verknüpfungsstelle 36 zugeführt wird. Die miteinander verknüpften Größen (p') und (s) werden dem Schwingsystem 10 und insbesondere dem Ultraschallgenerator 12 zugeführt.

Man erkennt, dass die Siegelfläche des walzenförmigen Gegenwerkzeuges 18 zwei gegenüberliegende Erhebungen 45 aufweist. Dies können beispielsweise längliche Rippen sein, die in axial Richtung eingeordnet sind. Bei der Bearbeitung der Materialbahn 20 wird das Gegenwerkzeug 18 um seine Achse gedreht, sodass die beiden Erhebungen 45 nacheinander mit der Materialbahn 20 in Kontakt treten und dann, wenn die Materialbahn zwischen Sonotrode 16 und Erhebung 45 eingeklemmt ist, für die Erzeugung einer Quersiegelnaht sorgen.

Immer dann, wenn einer der beiden Vorsprünge 45 über die Materialbahn 20 auf die Sonotrode 16 gepresst wird, wird dies dazu führen, dass über den Kraftsensor 32 eine abrupte Veränderung der Kraft gemessen wird. Wenn sich jedoch die Schweißkraft erhöht, muss die Sonotrode eine entsprechende Gegenkraft zur Verfügung stellen, das heißt es kommt zu einer geringfügigen elastischen Verformung des Sonotrodenhalters. Sobald die Erhebung 45 nicht mehr auf die Sonotrode 16 drückt, wird die Sonotrode sich wieder in ihre ursprüngliche Position zurückbewegen.

Auf Grund der elastischen Eigenschaften des Sonotrodenhalters wird dies jedoch zu einem Überschwingen führen, sodass der zeitliche Verlauf der Schweißkraft die Form einer gedämpften Schwingung aufweist. Da die Schweißkraft über den Sensor 32 jedoch kontinuierlich gemessen wird, wird im Stand der Technik die geänderte Schweißkraft auch über die Verknüpfungsstelle 36 ununterbrochen zugeführt, sodass auch dann, wenn die Erhebung 45 nicht in Kontakt mit der Materialbahn 20 ist, die gedämpfte Schwingung als skalierte Prozessgröße p' der Verknüpfung 36 zugeführt wird und die Regelung beeinflusst. Erfindungsgemäß ist daher eine Triggereinrichtung 44 vorgesehen, welche mit Hilfe eines Positionssensors 43 die Position der Erhebung 45 bestimmt und in Abhängigkeit von der Bestimmung den Schalter 46 betätigt, sodass die Verknüpfungsstelle 36 entweder mit der skalierten Prozessgröße p' oder mit einem konstanten Referenzwert ref verbunden ist.

In dieser Ausführungsform ist die Verknüpfungsstelle 36 immer dann mit dem konstanten Referenzwert ref verbunden, wenn die Erhebungen 45 keine Kraft mehr auf die Sonotrode 16 ausüben. Jegliche Veränderungen der Schweißkraft, die ohne Einflussnahme durch die Erhebungen 45 erfolgt, erfolgen nicht abrupt und können mit Hilfe der Regeleinrichtung 24 ausgeregelt werden. Dabei wird der Referenzwert so festgelegt, dass er der skalierten Prozessgröße p' entspricht, die der unmittelbar bevor die Verknüpfung mit dem Prozesswert erfolgt, gemessen wurde.

In Figur 2 ist eine typische Kraftmessung über der Zeit dargestellt.

Man erkennt zunächst einen weitestgehend konstanten Wert der gemessenen Kraft, wobei sich dann, wenn die Erhebung 45 über die Materialbahn 20 auf die Sonotrode 16 trifft, ein Kraftpeak 47 ausbildet, der durch die zusätzliche Last und die gleichzeitige Bedämpfung des Schwingungssystems verursacht wird. Etwa in Punkt 50 tritt jedoch die Erhebung 45 außer Eingriff. Deutlich zu erkennen sind kleinere Peaks 48, die das Nachschwingen des Systems charakterisieren.

In der Ausführungsform, die in der DE 10 2006 020 417 beschrieben ist, wird dieses Kraftsignal skaliert und mit der Stellgröße verknüpft. Dies ist in dem Bereich, in dem die Erhebung tatsächlich mit der Materialbahn in Eingriff ist, von Vorteil. Wenn jedoch die Erhebung nicht mit der Materialbahn in Eingriff ist, beeinflussen die Nachschwingpeaks 48 über die Verknüpfung die Regelung negativ.

Erfindungsgemäß wird daher in Abhängigkeit von einer Positionsmessung der Erhebung nur im Bereich zwischen den Zeitpunkten 49 und 50 eine Verknüpfung einer eventuell skalierten Prozessgröße p- mit der Stellgröße vorgenommen, während nach dem Zeitpunkt 50 die skalierte Prozessgröße durch einen konstanten Referenzwert ersetzt wird. Dieser konstante Referenzwert entspricht dem in Zeitpunkt 49 gemessenen Kraftwert.

### Bezugszeichenliste

- 10: Schwingsystem
- 12: Konverter
- 14: Amplitudentransformator
- 16: Ultraschallsonotrode
- 18: Gegenwerkzeug
- 20: Material
- 22: Rückführstrecke
- 24: Regeleinrichtung
- 26: PID-Regler
- 28: Schwingungskreis
- 30: Bearbeitungsprozess
- 32: Kraftsensor
- 34: Skaliereinheit
- 36: Verknüpfungsstelle
- 43: Positionssensor
- 44: Triggereinrichtung
- 45: Erhebung
- 46: Schalter
- 47: Kraftpeak
- 48: Nachschwingpeaks
- 49: Zeitpunkt
- 50: Zeitpunkt

## Patentansprüche

1. Vorrichtung zum Ultraschallbearbeiten von Materialien mit einem Ultraschallbearbeitungssystem bestehend aus einem Ultraschallgenerator, einem Konverter (12), einer Sonotrode (16) sowie einem Gegenwerkzeug (18), wobei Sonotrode (16) und/oder Gegenwerkzeug (18) eine im Wesentlichen zylinderförmige Siegelfläche mit mindestens einer Erhebung aufweist und um eine Drehachse drehbar ist, so dass sich die Erhebung (45) während der Bearbeitung um die Drehachse dreht und während einer Siegelzeit mit einer Materialbahn (20) in Berührung kommt, wobei eine Regeleinrichtung (24) für den Ultraschallgenerator vorgesehen ist, welcher eine Rückführgröße aus dem Ultraschallbearbeitungssystem zugeführt wird und die daraus eine Stellgröße ermittelt und dem Ultraschallgenerator zuführt, wobei eine Prozessgröße aus dem Bearbeitungsprozess ermittelt wird und mit der von der Regeleinrichtung (24) ermittelten Stellgröße vor der Zuführung zum Ultraschallgenerator verknüpft wird, wobei eine Triggereinrichtung (44) vorgesehen ist, welche einen Sensor (43) zur Bestimmung der Position der Erhebung (45) aufweist und eingerichtet ist, um in Abhängigkeit von der Positionsbestimmung die Verknüpfung der Prozessgröße mit der Stellgröße zu gestatten oder zu verhindern.

2. Vorrichtung nach Anspruch 1, **dadurch gekennzeichnet, dass** die Triggereinrichtung (44) derart ausgebildet ist, dass sie die Verknüpfung der Prozessgröße mit der Stellgröße gestattet, wenn die Erhebung (45) mit dem zu bearbeitenden Material (20) in Kontakt tritt, und sie verhindert, wenn die Erhebung (45) nicht mit dem zu bearbeiten Material (20) in Kontakt tritt.

3. Vorrichtung nach Anspruch 1 oder 2, **dadurch gekennzeichnet, dass** die Triggereinrichtung (44) derart ausgebildet ist, dass während die Verknüpfung der Prozessgröße mit der Stellgröße verhindert wird, stattdessen ein vorbestimmter Referenzwert mit der Stellgröße verknüpft wird.

4. Vorrichtung nach Anspruch 3, **dadurch gekennzeichnet, dass** der vorbestimmte Referenzwert als derjenige Wert der Prozessgröße festgelegt ist, der unmittelbar bevor die Triggereinrichtung (44) die Verknüpfung erlaubt erfasst worden ist.

5. Vorrichtung nach einem der Ansprüche 1 bis 4, **dadurch gekennzeichnet, dass** die Prozessgröße die Bearbeitungskraft der Sonotrode (16) ist.

6. Vorrichtung nach einem der Ansprüche 1 bis 5, **dadurch gekennzeichnet, dass** die Erhebung (45) eine im Wesentlichen längliche Form hat, welche axial auf der Siegelfläche ausgerichtet ist.

## Claims

1. Apparatus for the ultrasonic processing of materials having an ultrasound processing system comprising an ultrasound generator, a converter (12), a sonotrode (16) and a counterpart tool (18), wherein the sonotrode (16) and/or the counterpart tool (18) has a substantially cylindrical sealing surface having at least one raised portion and is rotatable so that the raised portion (45) rotates about the axis of rotation during the processing operation and during a sealing time comes into contact with a material web (20), wherein there is provided a closed-loop control device (24) for the ultrasound generator to which a feedback variable is fed from the ultrasound processing system and which ascertains therefrom an adjusting variable and feeds it to the ultrasound generator, wherein a process variable is ascertained from the processing process and is linked to the adjusting variable ascertained by the closed-loop control device prior to the feed to the ultrasound generator, wherein there is provided a trigger device (44) which has a sensor (43) for determining the position of the raised portion (45) is adapted to permit or prevent linking of the process variable to the adjusting variable in dependence on the position determination.

2. Apparatus according to claim 1 **characterised in that** the trigger device is so adapted that it permits linking of the process variable to the adjusting variable when the raised portion (45) comes into contact with the material (20) to be processed and prevents same when the raised portion (45) does not come into contact with the material (20) to be processed.

3. Apparatus according to claim 1 or claim 2 **characterised in that** the trigger device (44) is so adapted that while linking of the process variable to the adjusting variable is prevented instead a predetermined reference value is linked to the adjusting variable.

4. Apparatus according to claim 3 **characterised in that** the predetermined reference value is established as that value of the process variable, that had been detected immediately before the trigger device (44) allows linking.

5. Apparatus according to one of claims 1 to 4 **characterised in that** the process variable is the processing force of the sonotrode (16).

6. Apparatus according to one of claims 1 to 5 **characterised in that** the raised portion (45) is of a substantially elongate shape which is oriented axially on the sealing surface.

## Revendications

1. Dispositif de traitement par ultrasons de matériaux, comprenant un système de traitement par ultrasons constitué d'un générateur d'ultrasons, d'un convertisseur (12), d'une sonotrode (16) ainsi que d'un contre-outil (18), dans lequel la sonotrode (16) et/ou le contre-outil (18) présente(nt) une face de soudage de forme sensiblement cylindrique comportant au moins une proéminence et est(sont) apte(s) à pivoter autour d'un axe de rotation de façon telle que la proéminence (45) tourne autour de l'axe de rotation pendant le traitement et vient en contact avec une bande de matériau (20) pendant un temps de soudage, un dispositif de régulation (24) étant prévu pour le générateur d'ultrasons, dispositif auquel est acheminée une grandeur de rétroaction émise par le système de traitement par ultrasons et qui détermine, à partir de celle-ci, une grandeur de réglage et l'achemine au générateur d'ultrasons, une grandeur de processus issue du processus de traitement étant déterminée et reliée à la grandeur de réglage déterminée par le dispositif de régulation (24) avant acheminement au générateur d'ultrasons, un dispositif de déclenchement (44) étant prévu, lequel comporte un capteur (43) permettant de déterminer la position de la proéminence (45) et est configuré pour autoriser ou empêcher la relation entre la grandeur de processus et la grandeur de réglage en fonction de la détermination de position.

2. Dispositif selon la revendication 1, **caractérisé en ce que** le dispositif de déclenchement (44) est conçu de façon à autoriser la relation entre la grandeur de processus et la grandeur de réglage lorsque la proéminence (45) entre en contact avec le matériau (20) à traiter et à l'empêcher lorsque la proéminence (45) n'entre pas en contact avec le matériau (20) à traiter.

3. Dispositif selon la revendication 1 ou 2, **caractérisé en ce que** le dispositif de déclenchement (44) est conçu de façon telle que, lorsque la relation entre la grandeur de processus et la grandeur de réglage est empêchée, c'est une valeur de référence prédéterminée qui est alors associée à la grandeur de réglage.

4. Dispositif selon la revendication 3, **caractérisé en ce que** la valeur de référence prédéterminée est définie comme étant la valeur de la grandeur de processus qui a été détectée immédiatement avant que le dispositif de déclenchement (44) n'autorise la relation.

5. Dispositif selon l'une des revendications 1 à 4, **caractérisé en ce que** la grandeur de processus est la force de traitement de la sonotrode (16).

6. Dispositif selon l'une des revendications 1 à 5, **caractérisé en ce que** la proéminence (45) a une forme sensiblement allongée qui est alignée axialement sur la face de soudage.
